# EUROPEAN PATENT SPECIFICATION

(11) **EP 1 964 474 B1**
(45) Date of publication and mention of the grant of the patent: **30.11.2011**
(21) Application number: 06843909.0
(22) Date of filing: 15.12.2006
(51) Int. Cl.: A22C 11/00, A23L 1/317

(54) **METHOD FOR PRODUCING A CASING-LESS SAUSAGE- OR SIMILAR-TYPE FOOD PRODUCT AND PRODUCT THUS OBTAINED**
VERFAHREN ZUR HERSTELLUNG EINES HAUTFREIEN WURSTARTIGEN ODER ÄHNLICHEN NAHRUNGSMITTELPRODUKTS, UND SO ERHALTENES PRODUKT
PROCEDE D'ELABORATION D'UN PRODUIT ALIMENTAIRE DE TYPE SAUCISSE OU ANALOGUE SANS ENVELOPPE ET PRODUIT AINSI OBTENU

(30) Priority: 16.12.2005 MX NL05000101
(43) Date of publication of application: 03.09.2008
(73) Proprietor: Sigma Alimentos, S.A. De C.V., Neuvo Leon (MX)
(72) Inventor: ESPELETA VEGA, Alicia, Monterrey, Nuevo León (MX); MORA CASTILLO, César Dalmacio, C.P. 54987 Tultepec (MX)
(74) Representative: Elzaburu Marquez, Alberto
(86) International application number: PCT/MX2006/000144
(87) International publication number: WO 2007/069878

(56) References cited:
- EP-A- 0 325 315
- EP-A- 0 528 575
- EP-A1- 0 528 575
- WO-A-2004/039164
- ES-A- 8 703 246
- FR-A1- 2 379 985
- GB-A- 940 003
- US-A- 2 182 211
- US-A1- 2004 043 121
- US-A1- 2004 043 718
- US-A1- 2004 076 736
- US-A1- 2005 037 129

## Description

### TECHNICAL FIELD OF THE INVENTION

The present invention relates to a process for the elaboration of meat food products, and more particularly, to a process for elaborating of a casing-less sausage or similar type food product and with a special form different from the classic conventional form. A prior art method is known from US-A-2004/0043121.

### BACKGROUND OF THE INVENTION

At present there are numerous variants of sausages, such as sausages for cooking on a fire and/or smoking, sausages for cooking on a hotplate, sausages for baking, uncooked sausages, dry or semi-dry ones, etc. with or without a skin or a casing. These sausages can have different forms: straight, curves, round, or horseshoe-shaped, with the two ends of the sausage more or less separated between each other, and linked to each other through strings or end strings and the closing of the sausage, put together directly or indirectly by means of a supplementary link; an open ring such as described by Ercel Culp in the U.S. patent US-3,180,737; in form of a round disk, oval, elliptic, or flattened or rectangular parallelepiped, such as described by Peter Pfleiderer in the German patent DE-2,406,090, and by Busso Freres Salaisons Villett in the French patent FR-2,379,985.

The aforementioned sausages are made according to one out of the following two procedures: introduction into a skin or casing which former end have been previously closed and the other end is closed after filling the tubular coating with the edible contents, as described by Vytautas Kupcikevicius and Joseph A. Nausedas in the U.S. patent U.S.-3,860,996; molding through the corresponding mold of the required final product as described in formerly mentioned patents FR-2,379,985 and DE-2,406,090 that are described hereunder.

The German patent DE-2,406,090 describes a cooking sausage, flat-formed as an elliptical disk, wrapped in a skin. The sausage meat is molded, compressed, and is presented in the form of a disk mold and later warmed up, until then without any skin. Next, a skin, that is, an edible, coagulable substance such as the sodium alginate is applied over the meat mass of the sausages by pulverization or immersion.

The French patent FR-2,379,985 describes a sausage product in the form of a circular or oval disk, or in the form of a flat or rectangular parallelepiped. A coating cellophane sheet is situated at the bottom of a mold, and next the food paste of the sausage is compressed in the mold and the coating is closed around the food paste. The premolded food paste is placed on a grill, subject to cooking on a fire and later on dried. Next, the initial coating is taken off, which for its nature will not adhere to the edible contents. Finally, the cooked food paste is warmed up on a fire, dried, and freed of the coating in a bath of food jelly, and preferably being seasoned with spices.

Additionally, there are other systems and processes on the market for the elaboration of sausages, such as the process of co-extrusion that is based on the principle of simultaneous extrusion of a sausage food paste and of a collagen. Thus, a continual flow of sausage food paste and collagen are co-extruded through an injector by two separate pumps. Immediately afterwards, the co-extruded sausages leave the injector, these pass through a bath of potassium chloride to start the formation of an external matrix of collagen. Next, the product passes through a rotary cutter to cut and form the sausage conventionally, later a pre-drying is performed to form the initial crossed links of the protein, the liquid smoke is added, and next the following drying and the cooking, drying, packing, and a probable pasteurization.

Timohty G. Mally, in the Spanish patent ES-2,046,702, describes an equipment to form a casing less sausage or similars, the equipment has means for filling and forming a fluid food paste to make an elemental piece of a determined form; means for cooking in order to form a proteinic skin starting out from the food paste material of one part of the surface of an elemental piece in order to produce an elementary piece that has an external surface that includes a proteinic skin and part of a core that includes food paste material that was not formed into proteinic skin; means for extruding to remove one of the elemental pieces from the filling and forming means; and transportation means to receive and take an elemental piece that was removed by the extrusion means so that the transportation means have a way to form the ends to be applied to the food paste material and at least to one end of the received elemental material by the transportation means, and to form the end of the food paste material, giving it a general rounded configuration by the rotary movement between one of the elemental pieces and the means for creation of the ends so that in the end a product if created in the form of a conventional sausage.

Timohty G. Mally, Gary A. Andel, Nilang Patel and Dean F. Shwarz, in the publication of the Mexican patent application MX-9204690, describe a system for the creation of a casing less sausage or similar, the system has a flow production means for providing an elongated flow of a proteinic food paste material, where this elongated flow possesses a proteinic casing and a part of a core that includes food paste material that has not taken part in the formation of the proteinic casing; cutting means for cutting the elongated flow of the proteinic food paste material in a diversity of uncut pieces with two unfinished ends; means for the creation of the unfinished ends to form these ends and thus making the sausage units; and a cooking means to warm up and cook the sausages that were made. Moreover, the system has transportation and permanence means to transport and receive and the elongated flow of proteinic food paste material to the cutting means, and to provide a permanence time during which the proteinic casing thickens; and a means to transfer the diversity of uncut pieces to the means where the unfinished ends are produced.

Andrea Breu and Hubert Kott, in the Spanish patent ES-2,172,064, describe a procedure to elaborate an edible sausage, in particular a roasted sausage where a sausage strip made of a mixture of sausage that contains proteins or meat, is made in a rolled form, spiral, as a cookie or another form of a sausage, the sausage is elaborated without a skin made of a mixture of the sausage so that the elaboration of the skin as well as the union of the separate rings are performed through the modification of the sausage mixture by a heat or stream treatment.

Lee Kramer, in the U.S. patent US-6,203,832 B1, describes a method and an equipment to make casing less sausages and similar meat products. In such way that the emulsion of meat is extruded in a general cylindrical form, under pressure, whereas simultaneously at a room temperature of 170 °F (76.66 °C) a denaturalized solution is applied to make a cohesive surface over the extruded emulsion. Next, the extruded emulsion is submitted to a preliminary heating at a temperature of 140 °F (60 °C) to 180 °F (82.22 °C) to make segments of a length defined between the first and second ends. Finally, the segments are introduced to a cooking equipment at a temperature of 180 °F (82.22 °C) to 210 °F (98.88 °C).

Eugene R. Trippmann, in the Mexican patent MX-213,399, describes a process to produce a meat product without skin, which includes a piece of meat that is thermally treated so that it does not contain any external skin around it on its surface. The meat is located inside a cooking chamber that is hermetic to air and to steam generated from a water fountain. The steam and the pressure in the chamber is regulated in order to create an atmospheric humidity of 100 % in the chamber so that any amount of water is prevented to evaporate from within the meat towards the atmosphere of the chamber. The pressure can be reduced in order to produce a low temperature vapor of 150 °F (65.55 °C) to 180 °F (82.22 °C) for the cooking of the meat product. Moreover, water may be added to a flavoring ingredient, for example, liquid smoke to give the product a flavor, and the pressure can be reduced additionally so that the formation of a thin crust on the surface of the meat product is possible.

Richard A. Mueller *et al*., in the publication of the Mexican patent application PA/a/2002/003832, describe a method and equipment to make an emulsion or proteinic food paste in a food product configured without the use of a gut. An appropriate provision of emulsion is foreseen and transported under pressure towards an elongated empty filling tube to form a configured emulsion of continual length. Later, the configured emulsion is directed towards a molding tube that is mounted in a sliding manner around said filling tube. A treatment fluid is directed from a supply into the interior surface of the filling tube to humidify the interior part continually of the molding tube, and therefore form a proteinic skin around the configured emulsion.

Martinus W. J. T. Kujipers and Frederik F. L. H. Ankersmit, in the publication of the Mexican patent application PA/a/2004/003751, describe a method to create bent products of meat that involve extruding an elongated meat thread that contains linear protein fibers in said meat from an extrusion tube of food paste of elongated hollow meat. The food paste flow through the tube is partially restricted by a restriction element in the tube. After passing by the restriction element a first longitudinal portion results of meat food paste, mainly containing extended longitudinal fibers, gradually these transform into a second longitudinal portion of fibers, ready for a random orientation. When the meat thread is submitted to heat, the uninterrupted portion inclines to have more contractions over the length in the presence of heat than over the other layer, due to the fact that this provokes the meat product to have a loop configuration. The machine that brings this method into practice contains an extrusion tube with the restriction element within it.

The state of the art formerly described to elaborate sausages or similar products without a wrapping or casing implies processes to elaborate food products in a conventional way, that is, a sausage generally cylindrical in form, whereas those processes that allow forming products of the sausage-type with singular or peculiar forms, different from the tubular form, imply molding stages in a mold or freezing stages before cooking of the products. This implies limitations in the food industry where the form of the product and its cost are important, therefore, it is necessary to provide a process to elaborate a casing-less sausage or similar type food product, and that has a singular form completely different from the classic conventional form, without the use of molds or freezing stages during the process.

### SUMMARY OF THE INVENTION

Referring to the aforementioned and in order to solve the encountered limitations, the object of this invention is to provide a process for elaborating a casing-less sausage or similar type food product, the process comprises the steps as set out in claim 1.

### BRIEF DESCRIPTION OF THE FIGURES

The characteristic details of the present invention are described in the following paragraphs, together with the figures related to it, in order to define the invention, but not limiting the scope of it.
Figure 1 is a block diagram that describes a process for elaborating a casing-less sausage or similar type food product according to invention.
Figure 2 illustrates a frontal view of a rectangular output extrusion nozzle according to invention.
Figures 3A to 3D show a bodyside view, a frontal view, a top and sectional views respectively of an embodiment of a casing-less sausage or similar type food product in a form close to an elongated parallelepiped obtained by the process of the invention.

### DETAILED DESCRIPTION OF THE INVENTION

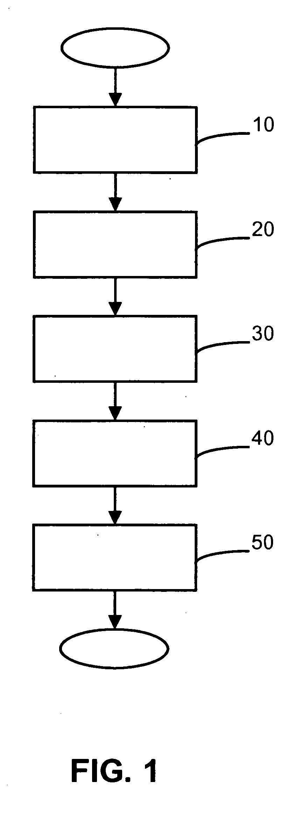

In reference to Figure 1, a process for elaborating a casing-less sausage or similar type food product as shown, the process initiates in step 10 where an emulsion-type sausage paste having a gel-like viscosity is prepared starting from one or more meat products, such as pork or beef, whether frozen or unfrosted, that are mixed in a cutting machine with water, salt, nitrites, non-meat stuffing products, and one or more binders or gums until provoking the mayor protein extraction in order to obtain an emulsion-type sausage paste of a general homogeneous and slightly shining appearance. The binder or gum used in the mixture has a relation in weight from about 1 % to about 5 % in relation to the weight of the sausage paste so that the binder can be at least an hydrocolloid, such as for example, starch, jelly, alginates, carrageenans, sodium carboxymethylcellulose, xanthan, guar, or konjac, or combinations thereof, that allow stabilizing the emulsion-type sausage paste offering it a viscosity similar to gel in a range from about 1400 Pa·s to about 2550 Pa·s, which allows the sausage paste to be extruded in portions and in a predetermined form without any substantial deformation of these portions during the later stages of the process of the invention.

The viscosity of the emulsion-type sausage paste, in relation to the variations in percentage of the binder weight, can be observed in Table 1, which shows the measurements performed to a emulsion-type sausage paste sample of approximately 800 grams and an approximate temperature of 7 °C to 8 °C placed in a precipitated glass of 1000 milliliters. The measurements were performed in triplicate in a programmable viscosimeter, brand BROOKFIELD model DV-II Pro, using an RV07 spindle at a speed of 1.5 rpm.

**Table 1**

| Percentage in weight of binder used in sausage emulsion | Viscosity (Pa·s) | | |
|---|---|---|---|
| | Sample 1 | Sample 2 | Sample 3 |
| 1 % | 1500 | 1490 | 1400 |
| 3 % | 1810 | 1720 | 1800 |
| 5 % | 2500 | 2550 | 2470 |

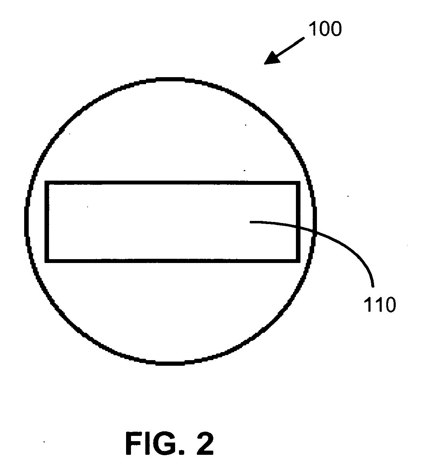

The emulsion-type sausage paste is introduced in the machine with an extruder of the type that generally has a filling hopper, and inside an extrusion press. Next, in step **20** and at an initial freezing temperature from about 0 °C to about 12 °C that allows maintaining the emulsion, the sausage paste is extruded in portions and in a predetermined form, when making it pass through the machine nozzle with the extruder, that is linked by one or more extrusion heads with one or more nozzles, and the latter in turn comprise a cutter that allows dosing the sausage paste in generally uniform portions that are extruded. The form of the nozzle used allows creating a portion of sausage paste to be extruded in a peculiar form, for example, as a round, oval, elliptic disk, or a flat or rectangular parallelepiped, or a prism, or combinations thereof, that by themselves are particular in having at least one generally flat surface. An example of an extrusion nozzle **100** with rectangular output **110** is shown in Figure 2, which allows extruding a sausage paste in a form close to an elongated parallelepiped.

Returning to Figure 1, each extruded and preformed sausage paste is placed on a conveyor that displaces uninterruptedly on a pulled conveyor band, under the extrusion nozzle in the direction of the extrusion and at the speed of said extrusion. Such extruded and preformed sausage paste portions are transported and introduced by the conveyor chain towards the interior of a furnace of the type with an upper heating panel and a lower heating panel, mounted one opposite the other and with space in between, adjustable, at a distance slightly bigger than the thickness of the sausage paste portions that have to be cooked.

In step **30**, as the extruded and preformed sausage paste portions are introduced into the furnace, in particular into the existing space between the upper and lower heating panels, said portions are cooked, as well on their upper as lower surfaces in a generally simultaneous and homogeneous manner, to form their own skin obtained by the heating of the external sausage paste of the portions, leaving a core which is surrounded of the skin and which consists of the sausage paste that was not used to form the skin. The term "own skin" refers to the external layer of the sausage paste that was cooked by the heating applied, forming a kind of superficial crust. The cooking of the extruded and preformed sausage paste portions, in the interior of the furnace, takes place with an approximate permanence of 10 seconds until approximately 50 seconds, and at an operational temperature from about 150 °C to about 200 °C, being this in general the temperature of the upper heating panel superior or equal to the temperature of the lower heating panel.

Once the sausage paste portions have been cooked, they leave with their own skin with an appearance and texture obtained according to the texture of the surface of the transporting conveyor and heating panels used, that is, for example in case heating panels are used with a coating of Teflon (PTFE), an own skin is obtained with a texture that is generally smooth, whereas in case of using a grill-type of conveyor chain, then a skin texture is obtained of the grill-type.

Next, in step **40**, the portions with an own skin are submitted to a second cooking step that comprises a drying and steam baking to provoke the final cooking of the cores of the portions with their own skin, forming thus the casing-less sausage or similar type food product. This is obtained by introducing the portions with their own skin to a drying chamber that operates at a temperature from about 110 °C to about 160 °C so that the dried portions with an own skin reach an internal product temperature from about 40 °C to about 65 °C. The drying in the drying chamber can be performed with the help of warm air that is blown into the interior part of the chamber. Later, the portions with an own skin and dried are steam baking when introduced in a steam chamber of the convection furnace-type that operates at a temperature from about 110 °C to about 160 °C. In this step the product obtained is a casing-less sausage or similar type food product that has an internal product temperature of about 80 °C.

Finally, in step **50**, the casing-less sausage or similar type food product is cooled down in a cooling chamber with cold air of about 4 °C until the casing-less sausage or similar type food product reaches an internal product temperature from about 10 °C to about 15 °C to proceed to its packing.

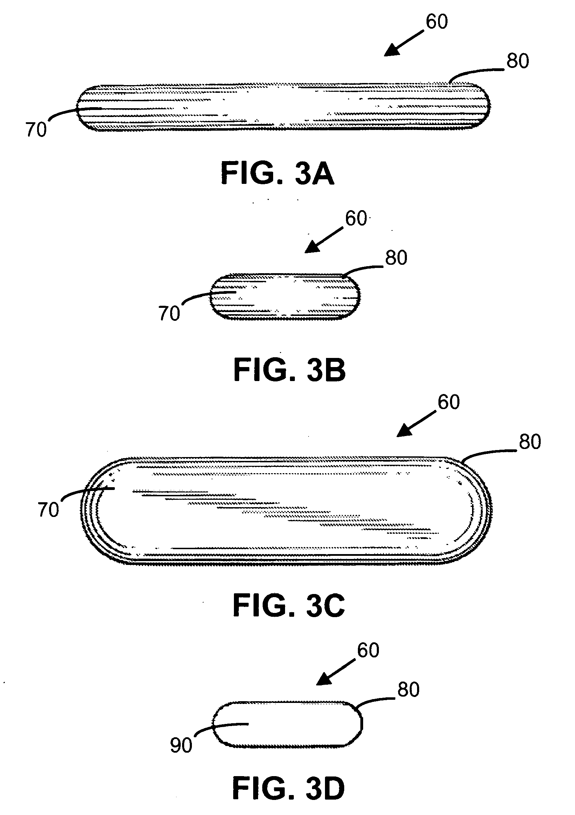

An example of the casing-less sausage or similar type food product **60**, in a form close to an elongated parallelepiped that is obtained by the process of the invention, as described above, is shown in Figures 3A to 3D, showing a bodyside view, a frontal view, an upper view, and a sectional view, respectively. The food product **60** obtained has a body **70** with at least one surface that is generally flat, the body **70** comprises its own skin **80** obtained by heating; a core **90** which is surrounded of the skin **80** and which consists of the sausage paste that was not used to form the skin **80**. In this case, the body **70** has a form of an elongated parallelepiped, however, it may have another form such as, for example, a round, oval, elliptic disk, or a prism, or combinations thereof, depending on the form of the extrusion nozzle used during the extrusion stage of the sausage paste (step **20** in Figure 1).

The advantages of the invention in relation to the state of the art can be summarized in the following topics:
- The emulsion-type sausage paste having a gel-like viscosity uses a range of binders or gums in a proportion in weight from about 1 % to about 5 %, in relation to the weight of the said sausage paste, which provides it with a body and viscosity in order to be extruded in portions and a predetermined form according to the form of the nozzle used, without the necessity to use guts, processes of co-extrusion, molding stages in a mold, or freezing stages to be able to change the classic form of the sausage into a peculiar, different form.
- While using the furnace with an upper and a lower heating panel to form the skin itself in a uniform manner on the product, it implies having a very short residing time in the furnace, which represents a saving in time related to the current, conventional processes.
- The casing-less sausage or similar type food product has a peculiar, different form compared with the classic conventional one, which represents a competitive advantage while providing, for example, a casing-less sausage or similar type food product in the form of a flat parallelepiped that allows covering the complete internal surface of a piece of bread for a "hot dog".
- Additionally, the fact that the casing-less sausage or similar type food product obtained has its own skin formed by the product itself, allows said product to have a texture with a peculiar appearance, such as for example, a smooth texture or of the type of the grill.

## Claims

1. A process for elaborating a casing-less sausage or similar type food product by preparing an emulsion-type sausage paste, extruding said sausage paste into portions, cooking said portions, and cooling said portions prior to packing; wherein said process is **characterized in that**:
said emulsion-type sausage paste has a gel-like viscosity of 1400 Pa·s to 2550 Pa·s in order to be extruded into portions of a predetermined shape without achieving any substantial deformation during said step of cooking; said shape having at least one essentially flat surface;
said step of cooking said extruded portions is performed in a furnace having an upper and lower heating panel in order to cook in a simultaneous and homogeneous manner the upper and lower surfaces of said portions to form a skin surrounding a core in said portions; and
a second cooking step is performed in order to cook the cores of said portions.

2. The process of claim 1, **characterized in that** said emulsion-type sausage paste comprising:
one or more milled meat products;
water;
salt;
nitrites; and
of 1 % to 5 % by weight of one or more binders, wherein said binder is at least one hydrocolloid selected from a group consisting of starch, jelly, alginates, carrageenan, sodium carboxymethylcellulose, xanthan, guar, konjac, and combination thereof.

3. The process of claim 1, **characterized in that** said step of extruding said sausage paste into portions of a predetermined shape is performed at an initial temperature of freezing from 0 °C to 12 °C in order to maintain the emulsion-type sausage paste.

4. The process of claim 1, **characterized in that** the step of cooking said portions is in a furnace is performed at a temperature of 150 °C to 200 °C.

5. The process of claim 1, **characterized in that** the temperature of said upper heating panel of said furnace is greater that or equal to the temperature of said lower heating panel.

6. The process of claim 1, **characterized in that** said extruded portions in said furnace are cooked in period of 10 to 50 seconds.

7. The process of claim 1, **characterized in that** said second cooking step comprising the steps of:
drying said portions; and
steam baking said portions.

8. The process of claim 7, **characterized in that** said steps of drying and steam baking said portions are performed at an operation temperature of 110 °C to 160 °C.

9. The process of claim 7, **characterized in that** in said step of drying said portions reach an internal product temperature of 40 °C to 65 °C.

10. The process of claim 7, **characterized in that** in said step of steam baking said portions reach an internal product temperature of 80 °C.

## Patentansprüche

1. Ein Verfahren zur Herstellung eines hautfreien wurstartigen oder ähnlichen Nahrungsmittelprodukts durch Herstellen einer Wurstmasse vom Emulsionstyp, Extrudieren der Wurstmasse zu Portionen, Garen der Portionen und Abkühlen der Portionen vor dem Verpacken; wobei das Verfahren **dadurch gekennzeichnet ist, dass**:
die Wurstmasse vom Emulsionstyp eine gelartige Viskosität von 1400 Pa·s bis 2550 Pa·s aufweist, um zu Portionen mit einer vorher festgelegten Form extrudiert zu werden, ohne eine wesentliche Verformung während des Schritts des Garens zu erfahren; wobei die Form mindestens eine im Wesentlichen flache Oberfläche aufweist;
der Schritt des Garens der extrudierten Portionen in einem Ofen mit einer oberen und einer unteren Heizplatte durchgeführt wird, um die oberen und unteren Oberflächen der Portionen in einer gleichzeitigen und homogenen Art und Weise zu garen, um eine einen Mittelbereich umgebende Randschicht in diesen Portionen zu bilden; und
ein zweiter Garschritt durchgeführt wird, um die Mittelbereiche der Portionen zu garen.

2. Das Verfahren nach Anspruch 1, **dadurch gekennzeichnet, dass** die Wurstmasse vom Emulsionstyp umfasst:
ein oder mehrere zerkleinerte Fleischprodukte;
Wasser;
Salz;
Nitrite; und
1 bis 5 Gew.-% eines oder mehrerer Bindemittel, wobei das Bindemittel mindestens ein Hydrokolloid, ausgewählt aus einer Gruppe bestehend aus Stärke, Gallert, Alginaten, Carrageen, Natriumcarboxymethylcellulose, Xanthan, Guar, Konjak und Kombinationen davon, ist.

3. Das Verfahren nach Anspruch 1, **dadurch gekennzeichnet, dass** der Schritt des Extrudierens der Wurstmasse zu Portionen mit einer vorher festgelegten Form bei einer anfänglichen Gefriertemperatur von 0°C bis 12°C durchgeführt wird, um die Wurstmasse vom Emulsionstyp beizubehalten.

4. Das Verfahren nach Anspruch 1, **dadurch gekennzeichnet, dass** der Schritt des Garens der Portionen in einem Ofen bei einer Temperatur von 150°C bis 200°C durchgeführt wird.

5. Das Verfahren nach Anspruch 1, **dadurch gekennzeichnet, dass** die Temperatur der oberen Heizplatte des Ofens höher als die oder gleich der Temperatur der unteren Heizplatte ist.

6. Das Verfahren nach Anspruch 1, **dadurch gekennzeichnet, dass** die extrudierten Portionen in dem Ofen in einem Zeitraum von 10 bis 50 Sekunden gegart werden.

7. Das Verfahren nach Anspruch 1, **dadurch gekennzeichnet, dass** der zweite Garschritt die Schritte umfasst:
Trocknen der Portionen; und
Dampfgaren der Portionen.

8. Das Verfahren nach Anspruch 7, **dadurch gekennzeichnet, dass** die Schritte des Trocknens und Dampfgarens der Portionen bei einer Betriebstemperatur von 110°C bis 160°C durchgeführt werden.

9. Das Verfahren nach Anspruch 7, **dadurch gekennzeichnet, dass** die Portionen in dem Schritt des Trocknens eine Produktinnentemperatur von 40°C bis 65°C erreichen.

10. Das Verfahren nach Anspruch 7, **dadurch gekennzeichnet, dass** die Portionen in dem Schritt des Dampfgarens eine Produktinnentemperatur von 80°C erreichen.

## Revendications

1. Procédé d'élaboration d'un produit alimentaire de type saucisse ou similaire sans enveloppe consistant à préparer une pâte à saucisse de type émulsion, extruder ladite pâte à saucisse en portions, faire cuire lesdites portions puis refroidir lesdites portions avant de les emballer ; dans lequel ledit procédé est **caractérisé en ce que** :
ladite pâte à saucisse de type émulsion a une viscosité de type gel de 1400 Pa·s à 2550 Pa·s afin d'être extrudée en portions ayant une forme prédéterminée sans réaliser de déformation substantielle au cours de ladite étape de cuisson, ladite forme ayant au moins une surface essentiellement plate ;
ladite étape de cuisson des portions extrudées est réalisée dans un four comportant un panneau chauffant supérieur et un panneau chauffant inférieur afin de cuire de façon simultanée et homogène les surfaces supérieure et inférieure desdites portions pour former une peau entourant un coeur dans lesdites portions ; et
une deuxième étape de cuisson est exécutée de manière à cuire les coeurs desdites portions.

2. Procédé selon la revendication 1, **caractérisé en ce que** ladite pâte à saucisse de type émulsion comprend :
un ou plusieurs produits carnés broyés ;
de l'eau ;
du sel ;
des nitrites ; et
de 1 % à 5 % en poids d'un ou de plusieurs liants, dans lequel ledit liant est au moins un hydrocolloïde sélectionné dans un ensemble comprenant l'amidon, la gelée, les alginates, le carraghénane, le carboxyméthylcellulose sodique, le xanthane, le guar, le konjac et leurs combinaisons.

3. Procédé selon la revendication 1, **caractérisé en ce que** ladite étape d'extrusion de ladite pâte à saucisse en portions de forme prédéterminée est réalisée à une température initiale de réfrigération allant de 0 °C à 12 °C afin de maintenir la pâte à saucisse de type émulsion.

4. Procédé selon la revendication 1, **caractérisé en ce que** ladite étape de cuisson desdites portions dans un four est réalisée à une température de 150 °C à 200 °C.

5. Procédé selon la revendication 1, **caractérisé en ce que** la température dudit panneau chauffant supérieur du four est supérieure ou égale à la température dudit panneau chauffant inférieur.

6. Procédé selon la revendication 1, **caractérisé en ce que** l'on fait cuire lesdites portions extrudées dans ledit four en une période de 10 à 50 secondes.

7. Procédé selon la revendication 1, **caractérisé en ce que** ladite deuxième étape de cuisson comprend les étapes suivantes :
sécher lesdites portions ; et
cuire lesdites portions à la vapeur.

8. Procédé selon la revendication 7, **caractérisé en ce que** lesdites étapes de séchage et de cuisson à la vapeur desdites portions sont réalisées à une température de fonctionnement de 110 °C à 160 °C.

9. Procédé selon la revendication 7, **caractérisé en ce que**, dans ladite étape de séchage, lesdites portions atteignent une température interne de produit de 40 °C à 65 °C.

10. Procédé selon la revendication 7, **caractérisé en ce que**, dans ladite étape de cuisson à la vapeur, lesdites portions atteignent une température interne de produit de 80 °C.
